# EUROPÄISCHE PATENTANMELDUNG

(11) **EP 3 858 462 A1**
(43) Veröffentlichungstag der Anmeldung: **04.08.2021**
(21) Anmeldenummer: 21153315.3
(22) Anmeldetag: 25.01.2021
(51) Int. Cl.: B01D 53/04

(54) **VERFAHREN ZUR ADSORPTIVEN ABTRENNUNG VON METALLCARBONYLEN AUS GASSTRÖMEN**

(30) Priorität: 29.01.2020 DE 102020102091
(71) Anmelder: Clariant International Ltd, 4132 Muttenz (CH)
(72) Erfinder: REITMEIER, Stephan, J., 85614 Kirchseeon (DE); REICHINGER, Markus, 83052 Bruckmühl (DE)
(74) Vertreter: Klingelhöfer, Stefan

(57) **Zusammenfassung**

Die Erfindung betrifft ein Verfahren zur adsorptiven Abtrennung von Metallcarbonylen aus einem CO, CO₂ und H₂ umfassenden Gasgemisch, dadurch gekennzeichnet, dass das verwendete Adsorbens einen Zeolith X umfasst.

## Beschreibung

Die Umwandlung von Gasströmen im industriellen Maßstab wird verbreitet durch den Einsatz von heterogenen Katalysatoren durchgeführt. Diese Katalysatoren reagieren teilweise sensibel auf die Anwesenheit von Verunreinigungen im Gasstrom. Solche Verunreinigungen können vom Katalysator adsorbiert werden und so dessen katalytische Eigenschaften drastisch reduzieren.

Ein wichtiger Aspekt industrieller Prozesse zur Umwandlung von Gasströmen besteht deshalb in der Abtrennung von Verunreinigungen aus dem Gasstrom, bevor dieser mit dem Katalysator in Kontakt kommt.

Insbesondere im Bereich der Synthese von Methanol ausgehend von einem Synthesegasstrom liegen Carbonyle wie Fe(CO)₅ oder Ni(CO)₄ vor, die durch die Reaktion des CO im Synthesegasstrom mit den Edelstahlverkleidungen der Leitungswände entstehen können oder bereits als Nebenprodukte bei der Gewinnung des Synthesegases aus Kohle entstanden sind. Bei Kontakt mit dem Katalysator für die Methanolsynthese - typischerweise ein Katalysator auf Cu/Zn/Al-Basis - werden diese Carbonyle von diesem irreversibel adsorbiert und zerfallen im Weiteren in CO und das entsprechende Metall, wodurch die katalytische Aktivität des Katalysators drastisch reduziert wird und dieser früher gewechselt werden muss.

Außerdem führt die Bildung von Eisenspezies auf dem Katalysator zur vermehrten Bildung von Fischer-Tropsch-Produkten, was die Selektivität zu Methanol zusätzlich verringert.

US 5,451,384 A beschreibt die Abtrennung von Metallcarbonylen aus einem Gasstrom, zum Beispiel einem Synthesegasstrom, durch Adsorption an Bleioxid auf einem Trägermaterial. Das hierbei verwendete bleihaltige Adsorbens stellt aufgrund der toxischen Eigenschaften von Blei keine nachhaltige Lösung dar.

In der WO 00/02644 A1 wird ein Verfahren zur Abtrennung von Metallcarbonylen aus einem Gasstrom, enthaltend Schwefelwasserstoff und/oder Wasser, beschrieben, bei dem ein hydrophobes Adsorbens mit einem zugänglichen Porenvolumen für Poren im Bereich von 0,55 bis 4 nm Durchmesser von mindestens 0,005 mL/g aufweist. Beispielhaft wird ein Zeolith vom Faujasit-Typ mit einem Si/Al-Verhältnis von mindestens 80 verwendet.

Das Verfahren zur Abtrennung von Metallcarbonylen aus einem Synthesegasstrom gemäß EP 2 069 231 B1 wird mit einem Adsorbens umfassend Aktivkohle oder einen hydrophoben Zeolithen durchgeführt. Die Metallcarbonyle werden dabei reversibel adsorbiert und desorbiert.

In der EP 2 156 877 B1 wird ein Verfahren zur Abtrennung verschiedener Verunreinigungen, unter anderem Metallcarbonyle, beschrieben. Als Adsorbenzien, die zur Abtrennung der einzelnen Komponenten verwendet werden, werden Aktivkohle, Alumina, Zinkoxid, Zeolith und ein Kupferoxid/Zinkoxid-Material eingesetzt.

EP 3 165 504 A1 beschreibt die Abtrennung von Metallcarbonylen mit einem Katalysator, umfassend Silica, Silica-Alumina, Zeolith und/oder ein Molekularsieb. Bevorzugt weist der Katalysator einen Anteil an Silica im Bereich von 80 bis 90 Gew.-% und Alumina im Bereich von 10 bis 20 Gew.-% auf.

WO 2012/084871 A1 offenbart ein Verfahren zur Entfernung von Verunreinigungen, unter anderem Schwefelverbindungen und Metallcarbonylen, aus einem Gasstrom, bei dem der Gasstrom unter anderem durch ein Bett von Adsorbenzien geleitet wird. Bevorzugt werden Aktivkohle oder ein Zeolith verwendet.

Eijkhoudt et al. (Removal of volatile metal carbonyls from raw syngas, PREPRINTS OF SYMPOSIA- DIVISION OF FUEL CHEMISTRY AMERICAN CHEMICAL SOCIETY; 1999, 44, 1; S. 119-123) beschreibt die Verwendung von Zeolith Y für die adsorptive Abtrennung von Metallcarbonylen aus einem Gasstrom. Der verwendete Zeolith Y kann hierbei durch thermische Behandlung regeneriert werden kann. Dies zeigt deutlich, dass das Fe(CO)₅ hier nur schwach durch Physisorption gebunden ist. Dies ist jedoch von erheblichem Nachteil. So können Temperatur,- und Druckschwankungen dazu führen, dass ein Teil des Fe(CO)₅ desorbiert wird und den stromabwärts gelegenen Methanolkatalysator vergiften kann. Das Gleiche gilt auch für leichte Schwankungen in der Fe(CO)₅ Konzentration.

Die Deaktivierung des Methanolkatalysators durch Eisen ist seit langem bekannt und entsprechend beschrieben (Harald H. Kung, Catal. Today, 1992, 11, S. 443-453). Der Eintrag erfolgt dabei durch das entsprechende Metallcarbonyl Fe(CO)₅. Dieses kann sich im Methanolprozess aus dem im Synthesegas vorhandenen CO und dem Eisen aus dem für die Leitungen und anderen Bauteile verwendeten Stahl insitu bilden (H. Inouye, J. Materials for Energy Systems; 1979, 1, S. 52-60). Eine weitere Quelle von Fe(CO)₅ stellt die bei der zur Synthesegasgewinnung verwendete Kohle dar (B.L. Bhatt, Separation Science and Technology, 26(12), S. 1559-1574, 1991). Diese kann Eisen als Verunreinigung enthalten, das so in den Prozess gelangt. Aufgrund des hohen Gasdurchsatzes reichen auch schon Konzentrationen an Fe(CO)₅ im ppb-Bereich aus, um die Standzeit des Katalysators signifikant zu reduzieren.

Zur Vermeidung einer zu starken Deaktivierung der Katalysatoren für Gasphasenreaktionen, insbesondere für die Methanolsynthese aus Synthesegas, besteht weiterhin Bedarf an einem effizienten Verfahren zur Abtrennung von Metallcarbonylen, insbesondere von Fe(CO)₅, aus dem Gasstrom.

Diese Aufgabe wird durch die Verwendung eines Adsorbens gelöst, das einen Zeolith X umfasst.

Gegenstand der vorliegenden Erfindung ist daher ein Verfahren zur adsorptiven Abtrennung von Metallcarbonylen aus einem Gasstrom umfassend CO, CO₂ und H₂, dadurch gekennzeichnet dass ein Adsorbens verwendet wird, das einen Zeolith X umfasst.

Zeolith X weist eine Gerüststruktur vom Faujasit-Typ (kurz: FAU) auf, die näher im "Atlas of Zeolite Framework Types", Ch. Baerlocher, 6th Edition, 2007 beschrieben ist.

Der Zeolith X weist ein atomares Si/Al-Verhältnis im Bereich von 1,0 bis 1,5 auf. Bevorzugt handelt es sich bei dem Zeolith X um einen Zeolith X mit einem atomaren Si/Al-Verhältnis von 1,10 bis 1,50, bevorzugter mit einem Si/Al-Verhältnis von 1,15 bis 1,25.

Der Zeolith X kann in der H-Form, der NH₄-Form, der Na-Form, der Li-Form, der K-Form oder als Mischung dieser Formen vorliegen. Bevorzugt liegt der Zeolith X in der Na-Form vor.

Das Adsorbens kann in verschiedenen Formen vorliegen. Beispielhafte Ausführungsformen sind Pulver oder sphärische Formkörper wie beispielsweise Granulate, Kugeln, Extrudate oder Tabletten, wobei das Adsorbens vorzugsweise in Form von Granulaten oder Kugeln vorliegt, am bevorzugtesten in Form von Kugeln. Zur Formgebung der Kugeln eignen sich verschiedene Herstellungsverfahren, z.B. Agglomerisations- oder Granulierprozesse, beispielsweise im Pelletier-Teller oder Eirich-Mischer, Sprühtrocknungsverfahren, Extrusion mit nachfolgender Verrundung oder sogenannte Oil-Drop-Verfahren.

Das Mikroporenvolumen des Adsorbens beträgt zwischen 150 und 500 mm³/g, bevorzugt zwischen 200 und 400 mm³/g und ganz bevorzugt zwischen 230 und 400 mm³/g, bestimmt mittels Stickstoff-Adsorption und berechnet nach t-plot-Methode.

Das Porenvolumen des Adsorbens beträgt zwischen 150 und 400 mm³/g, bevorzugt zwischen 200 und 350 mm³/g, besonders bevorzugt zwischen 250 und 330 mm³/g, bestimmt mittels Hg-Porosimetrie gemäß ASTM-D4282-12.

Die Porosität des Adsorbens ist üblicherweise mindestens 20 %. In einer bevorzugten Ausführungsform ist sie mindestens 25 %, am bevorzugtesten mindestens 28 %. In einer besonders bevorzugten Ausführungsform liegt sie im Bereich von 28 % bis 40 %.

Die Seitendruckfestigkeit des Adsorbens ist mindestens 20 N, bevorzugt mindestens 40 N, besonders bevorzugt mindestens 50 N. Sie liegt bevorzugt im Bereich von 20 bis 150 N, besonders bevorzugt im Bereich von 40 bis 140 N, ganz besonders bevorzugt im Bereich von 50 bis 120 N.

Die Seitendruckfestigkeit per Durchmesser (SDFD) des Adsorbens ist mindestens 4,0 N/mm, bevorzugt mindestens 8,0 N/mm. Sie liegt bevorzugt im Bereich von 4,0 N/mm bis 60,0 N/mm, bevorzugt von 8,0 N/mm bis 56,0 N/mm, am bevorzugtesten von 10,0 N/mm bis 48,0 N/mm.

Die BET-Oberfläche des Adsorbens beträgt üblicherweise mindestens 500 m²/g, bevorzugt mindestens 600 m²/g. In einer bevorzugten Ausführungsform liegt sie im Bereich von 500 bis 900 m²/g, bevorzugt im Bereich von 600 bis 850 m²/g und besonders bevorzugt im Bereich von 650 bis 800 m²/g.

Die Druckfestigkeit (auch bekannt als Bulk Crush Strength, BCS) des Adsorbens ist größer oder gleich 0,7 MPa, bevorzugt größer oder gleich 0,8 MPa, am bevorzugtesten größer oder gleich 1,0 MPa. Sie liegt typischerweise im Bereich von 0,7 MPa bis 3,0 MPa, bevorzugt im Bereich von 0,8 MPa bis 2,5 MPa, am bevorzugtesten im Bereich von 1,0 MPa bis 2,0 MPa.

Das Adsorbens weist üblicherweise eine Wasseraufnahmekapazität von mindestens 20 kg Wasser pro 100 g trockenem Adsorbens auf. Bevorzugt weist das Adsorbens eine Wasseraufnahmekapazität von mindestens 30 kg Wasser pro 100 g trockenem Adsorbens auf.

Wenn das Adsorbens in Form von Formkörpern vorliegt, werden diese Formkörper durch das Vermischen des Zeolithen mit einem Bindemittel und Agglomeration dieser Mischung bereitgestellt.

Nach der Agglomeration liegt das Agglomerat bevorzugt kugelförmig vor. Der arithmetische mittlere Kugeldurchmesser beträgt höchstens 10,0 mm, bevorzugt höchstens 8,0 mm, bevorzugter höchstens 6,0 mm. Vorzugsweise liegt der mittlere Kugeldurchmesser im Bereich von 1,0 mm bis 10,0 mm, bevorzugt von 1,5 mm bis 8,0 mm, noch bevorzugter von 2,0 mm bis 6,0 mm, am bevorzugtesten im Bereich von 2,5 mm bis 5,0 mm.

Als Bindemittel eignen sich prinzipiell alle Verbindungen, die die mechanische Stabilität des Adsorbens erhöhen. Geeignete Bindemittel sind Aluminiumoxid, wie beispielsweise Pseudoboehmit, Boehmit oder Korund, Siliciumdioxid, Calciumaluminat, Calciumsilikat oder Tonmineralien, wie Bentonit, Kaolin, Kaolinit, Metakaolin, Nacrit, Halloysit, Dickit, Attapulgit, Sepiolit, Montmorillonit oder Illit.

In einer bevorzugten Ausführungsform ist das zur Agglomeration eingesetzte Bindemittel so gewählt, dass es zeolithisierbar ist. Es ist bevorzugt ausgewählt aus der Gruppe umfassend Bentonit, Kaolin, Kaolinit, Metakaolin, Nacrit, Halloysit, Dickit, Sepiolit, Montmorillonit oder Illit, besonders bevorzugt Kaolin, Kaolinit oder Metakaolin, noch bevorzugter Kaolin oder Metakaolin.

In einer Ausführungsform wird das Agglomerat einer Kalzinierung unterzogen. Diese wird üblicherweise bei einer Temperatur im Bereich von 400 bis 800 °C, bevorzugt von 450 bis 600 °C durchgeführt. Die Dauer wird üblicherweise zwischen 1 h und 5 h gewählt, bevorzugt zwischen 2 h und 4 h.

In einer weiteren Ausführungsform wird das Agglomerat enthaltend den Zeolith X und das Bindemittel und optional Additive wie z.B. eine Siliziumquelle oder einen oder mehrere Porenbildner in einer wässrigen alkalischen Lösung thermisch behandelt, wobei die wässrige alkalische Lösung außerdem optional noch eine oder mehrere Siliziumquellen und/oder Aluminiumquellen für die Umwandlung des Bindemittels in einen Zeolith X mit atomarem Si/Al-Verhältnis im erforderlichen Bereich enthält. Durch ansonsten bekannte Verfahrenssteuerung kann so der Anteil des nicht-zeolithischen Bindemittels in Partikel von Zeolith X umgewandelt werden, die direkt mit den bereits vorhandenen Partikeln von Zeolith X Bindungen eingehen und zu einem Material führen, das sich insbesondere durch eine hohe Festigkeit auszeichnet.

Bei der alkalischen Lösung handelt es sich um eine AlkalihydroxidLösung, insbesondere um eine Natriumhydroxid-Lösung oder eine Kaliumhydroxid-Natriumhydroxid-Lösung, bevorzugt um eine Natriumhydroxid-Lösung.

Die Zeolithisierung wird so durchgeführt, dass mindestens 50 Gewichts-%, bevorzugt mindestens 80 Gewichts-% des eingesetzten Bindemittels in einen Zeolithen X umgewandelt werden.

In einer besonders bevorzugten Ausführungsform liegt das Bindemittel nach der thermischen Behandlung in der wässrigen alkalischen Lösung vollständig als Zeolith X vor. Ein solches Adsorbens wird als binderloses Adsorbens bezeichnet. Darunter ist ein Material zu verstehen, in dem die Zeolithpartikel im Wesentlichen durch andere Zeolithpartikel miteinander verbunden sind. Im Gegensatz zu einem bindemittelhaltigen Adsorbens besteht das binderlose Adsorbens vollständig aus dem für die Adsorptionswirkung benötigten Zeolith und weist durch die Bindung der Zeolithpartikel untereinander dennoch eine hohe Festigkeit auf.

In einer Ausführungsform umfasst das Adsorbens neben dem Zeolith vom Typ Zeolith X noch Zeolithe mit anderen Strukturtypen, insbesondere Zeolith A oder Zeolith P.

In einer weiteren Ausführungsform enthält das Adsorbens keinen Zeolith Y.

In einer bevorzugten Ausführungsform enthält das Adsorbens keinen anderen Zeolithen als den vom Typ Zeolith X.

In einer besonders bevorzugten Ausführungsform ist das Adsorbens binderlos und besteht nur aus Zeolith vom Typ Zeolith X, bevorzugt in der Na-Form.

Die adsorptive Abtrennung erfolgt üblicherweise bei einem Absolutdruck im Bereich von 20 bis 100 bar, bevorzugt im Bereich von 30 bis 90 bar, besonders bevorzugt im Bereich von 30 bis 80 bar und am bevorzugtesten im Bereich von 60 bis 80 bar. Sie erfolgt üblicherweise in einem Temperaturbereich von 30 °C bis 300 °C, bevorzugt im Bereich von 50 °C bis 270 °C, besonders bevorzugt im Bereich von 160 °C bis 270 °C, am bevorzugtesten im Bereich von 180 °C bis 230 °C.

In einer weiteren Ausführungsform liegt die Temperatur im Bereich von 10 °C bis 40 °C, bevorzugt im Bereich von 20 °C bis 30 °C, und der Absolutdruck im Bereich von 1 bis 6 bar.

In einer noch weiteren Ausführungsform liegt die Temperatur im Bereich von 10 °C bis 110 °C, bevorzugt 10 °C bis 40 °C, mehr bevorzugt im Bereich von 20 °C bis 30 °C, und der Absolutdruck im Bereich von 20 bis 100 bar, bevorzugt 30 bis 80 bar.

Der Gasstrom wird üblicherweise mit einer gasbezogenen Raumgeschwindigkeit (GHSV; gas hourly space velocity) im Bereich von 1000 bis 120000 h⁻¹ über das Adsorbens geleitet. Bevorzugt beträgt die Raumgeschwindigkeit 1000 bis 100000 h⁻¹, bevorzugter 10000 bis 100000 h⁻¹, besonders bevorzugt 20000 bis 100000 h⁻¹.

Bei der adsorptiven Abtrennung wird das im Gasstrom enthaltene Metallcarbonyl durch das Adsorbens adsorbiert und in einem weiteren Schritt chemisorbiert. Hierbei wird das Metallcarbonyl an der Oberfläche des Adsorbens zersetzt und das dabei entstehende, nichtflüchtige Metall irreversibel an der Oberfläche des Adsorbens gebunden. Hierdurch wird eine reversible Desorption des Metallcarbonyls und eine anschließende Vergiftung des Katalysators vermieden.

In einer weiteren Ausführungsform ist das Verfahren dadurch gekennzeichnet, dass das Adsorbens ausgetauscht wird, sobald seine Aufnahmekapazität für das Metallcarbonyl einen definierten Wert erreicht hat.

Bei dem Metallcarbonyl in dem Gasstrom handelt es sich üblicherweise um Fe(CO)₅ und/oder Ni(CO)₄, bevorzugt handelt es sich um Fe(CO)₅.

Das in dem Verfahren als Gasstrom eingesetzte Gasgemisch umfasst Wasserstoff, CO und CO₂. Zusätzlich können noch Verunreinigungen oder Anteile eines Spülgases vorliegen.

In einer Ausführungsform beträgt der Anteil an CO₂ im Gasstrom 1 bis 15 Volumen-%, bevorzugt 1 bis 10 Volumen-%, besonders bevorzugt 2 bis 10 Volumen-%, am bevorzugtesten 2 bis 5 Volumen-%.

In einer weiteren Ausführungsform beträgt der Anteil an CO im Gasstrom 3 bis 35 Volumen-%, bevorzugt 5 bis 30 Volumen-%, besonders bevorzugt 10 bis 30 Volumen-%, am bevorzugtesten 7 bis 18 Volumen-%.

In einer weiteren Ausführungsform beträgt der Anteil an Wasserstoff im Gasstrom 50 bis 96 Volumen-%, bevorzugt 50 bis 80 Volumen-%, besonders bevorzugt 60 bis 80 Volumen-%.

Bei dem Spülgas handelt es sich üblicherweise um Stickstoff oder Argon. Eine typische Verunreinigung stellt Methan dar.

Wenn das Metallcarbonyl als Fe(CO)₅ vorliegt, beträgt der Anteil an Fe(CO)₅ in dem Gasstrom üblicherweise bis zu 200 ppmv, bevorzugt bis zu 100 ppmv, besonders bevorzugt bis zu 50 ppmv.

Wenn das Adsorbens in einem Prozess zur Methanolsynthese eingesetzt wird, ist das Verfahren typischerweise dadurch gekennzeichnet, dass sich Adsorbens und Methanolkatalysator in zwei separaten Reaktoren befinden. Der Synthesegasstrom wird zunächst durch den Reaktor mit dem Adsorbens geleitet, wodurch die Abtrennung der Carbonyle bewirkt wird. Anschließend wird der gereinigte Synthesegasstrom in den Reaktor für die Methanolsynthese geleitet.

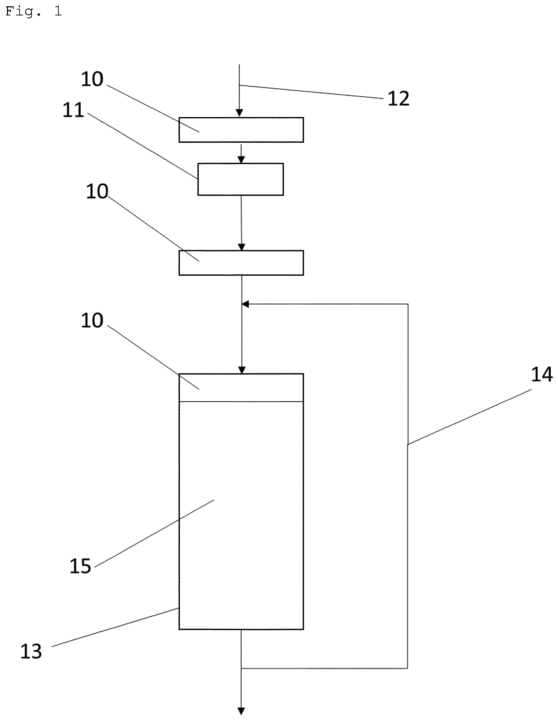

Der Reaktor mit dem Adsorbens kann dabei je nach Anlagenkonstruktion an verschiedenen Stellen vor dem Methanolkatalysator vorliegen. Ein prinzipielles Schema einer solchen Adsorbens-Anordnung wird in Fig. 1 dargestellt, wobei die dort dargestellten Positionen des Adsorbens verschiedene Ausführungsformen darstellen. In einer Ausführungsform befindet sich das Adsorbens 10 vor dem Kompressor 11, der den Synthesegasstrom 12 komprimiert und in den Methanolreaktor 13 leitet.

In einer anderen Ausführungsform befindet sich das Adsorbens 10 zwischen dem Kompressor 11 und dem Methanolreaktor 13.

In einer anderen Ausführungsform kann das Adsorbens 10 auch direkt mit dem Methanolkatalysator 15 gemeinsam im Methanolreaktor 13 vorliegen. Hierbei wird der Reaktor zunächst mit dem Methanolkatalysator 15 befüllt, anschließend wird auf die Schüttung das Adsorbens 10 gefüllt. Zwischen Adsorbens- und Katalysatorschüttung kann außerdem eine Schüttung aus Inertmaterial platziert werden. Ein Teil des nicht umgesetzten Synthesegasstroms 12, der den Methanolreaktor 13 verlässt, wird mittels eines Spülgases wieder zurückgeführt und vorne in den Methanolreaktor 13 eingeleitet. Dabei wird der zurückgeführte Strom 14 mit dem Synthesegasstrom 12 vermischt und über das stromaufwärts zum Methanolkatalysator 15 befindliche Adsorbens 10 geleitet.

In industriellen Größenordnungen kann der Gasstrom für die Methanolsynthese Verunreinigungen an H₂S oder organischen Sulfiden enthalten. In diesem Fall wird in einer Ausführungsform vor dem erfindungsgemäßen Adsorbens ein Material, beispielsweise auf Basis von ZnO, positioniert, um die Schwefelverbindungen effektiv aus dem Gasstrom zu entfernen, ehe sie mit dem erfindungsgemäßen Adsorbens in Kontakt kommen können. In einer weiteren Ausführungsform wird hinter dem erfindungsgemäßen Adsorbens ein Material, beispielsweise auf Basis von ZnO, positioniert, um die Schwefelverbindungen aus dem Gasstrom zu entfernen. In einer weiteren Ausführungsform werden vor dem erfindungsgemäßen Adsorbens und hinter dem erfindungsgemäßen Adsorbens jeweils ein Material, beispielsweise auf Basis von ZnO, positioniert, um die Schwefelverbindungen effektiv aus dem Gasstrom zu entfernen.

Typischerweise wird das Adsorbens erst aus dem Reaktor entfernt, wenn der Methanolkatalysator ebenfalls entfernt wird.

Im Folgenden soll die Erfindung anhand von Ausführungsbeispielen und Figuren noch näher erläutert werden. Es zeigen:
- Figur 1 eine schematische Darstellung einer Reaktoranordnung mit verschiedenen möglichen Positionen des Adsorbens
- Figur 2 die Durchbruchskurve der Adsorbenzien A bis C
- Figur 3 die Durchbruchskurve des Adsorbens D

### Experimenteller Teil

### Messmethoden

### Wasseraufnahmekapazität (H₂O-Kapazität)

Ein Exsikkator wurde bereitgestellt, der mit P₂O₅ gefüllt war, um der Luft im Inneren des Exsikkators die Feuchtigkeit zu entziehen. Zur Bestimmung der H₂O-Kapazität der Adsorbenzien wurden 1-2 g der Probe bei 450 °C für 2h getrocknet und anschließend ohne Zeitverzug heiß in den Exsikkator gestellt, der direkt verschlossen wurde. Die Probe wurde im Exsikkator in Anwesenheit des P₂O₅ abgekühlt. Anschließend wurde die Probe kurzfristig aus dem Exsikkator entnommen und deren Masse bestimmt. Anschließend wurde das P₂O₅ durch ein Trockenmittel ersetzt, das so gewählt wurde, dass sich im Inneren des Exsikkators eine relative Luftfeuchtigkeit von 55 % einstellte. Die Proben wurden für 24 h im Exsikkator bei 25 °C gelagert. Anschließend wurde die Probe aus dem Exsikkator entnommen und die Wasseraufnahme der Probe gravimetrisch bestimmt. Die H₂O-Kapazität berechnet sich als Verhältnis der aufgenommenen Wassermenge zum Gewicht des getrockneten Adsorbens vor der Wasseraufnahme.

### Mikroporenvolumen/ BET Oberfläche/ Mikroporenverteilung (Ar)

Die Bestimmung des Mikroporenvolumens und der BET-Oberfläche erfolgte mit einem ASAP 2020 C der Firma Micromeritics. Es wurden ca. 400 mg der Probe in ein Probenröhrchen eingewogen, anschließend für 18 h evakuiert und mit folgendem Temperaturprogramm ausgeheizt: 2 °C/min auf 120 °C erhitzen, 60 min halten; mit 5 °C/min weiter auf 400 °C erhitzen, Haltezeit 840 min. Nach dem Ende der Messung wurde das Probenröhrchen samt Probe gewogen, um die Trockenmasse der Probe zu bestimmen. Danach wurde die Probe evakuiert und in einem Dewar-Gefäß mit flüssigem Stickstoff platziert und die N₂-Adsorptionsmessung wurde gestartet. Aus den Sorptionsdaten wurde mittels der Software ASAP 2020 V4.01 das Mikroporenvolumen mittels der t-Plot Methode und die BET-Oberfläche berechnet.

### Porenvolumen und Porosität

Zur Bestimmung des Porenvolumens und der Porosität wurde das Quecksilber-Porosimeter PASCAL 440 von Thermo Electron Corporation verwendet. Die Messung erfolgte gemäß ASTM-D4284-12.

Für die Durchführung der Messungen wurde die Probe zunächst bei 60 °C für 16 h getrocknet. Die Probe wurde danach in einem Dilatometer bei Raumtemperatur für 30 min evakuiert (p < 0,01 mbar) und mit Quecksilber befüllt. Nach Einsetzen in den Autoklaven des PASCALs 440 wurde der Druck langsam auf bis zu 4000 barü erhöht. Die Auswertung erfolgte unter der Annahme von zylindrischen Poren, einem Kontaktwinkel von 140° und einer Oberflächenspannung des Quecksilbers von 480 dyn/cm.

### Bulk crush strength

Die Messung der Druckfestigkeit (auch bekannt als Bulk Crush Strength, BCS) wurde gemäß SMS1471 (Shell Method Series SMS 1471-74, "Determination of Bulk Crushing Strength of Catalysts. Compression-Sieve Method") durchgeführt. Zur Messung wurde ein Druckfestigkeitsmessgerät Zwick Roell Z020 der Firma Zwick/Roell GmbH verwendet.

Zur Abtrennung von bei der Messung entstehenden Feinanteilen wurde ein Sieb mit der Maschenweite von 200 µm eingesetzt, in Abweichung von der SMS1471-74.

Eine Probe mit einem Volumen von ca. 20 cm³ wurde zur Abtrennung von anhaftenden Feinanteilen mit dem Sieb gesiebt und im Trockenofen für mindestens 2 h bei 250 °C getrocknet. Anschließend wurde diese Probe in einen Zylinder mit klar definiertem Durchmesser gefüllt. Für eine bessere Druckverteilung wurde ein Bett aus Edelstahlkugeln auf die Schüttung des Adsorbens gegeben. Über einen Stempel wurde nun ein Druck auf die Probe ausgeübt, der kontinuierlich erhöht wurde. Nach Ende der Messung wurden die Edelstahlkugeln separiert und die Schüttung des Adsorbens' in das Analysensieb überführt. Im Zylinder verbliebene Feinanteile wurden mit Hilfe eines Pinsels in das Sieb überführt.

Anschließend erfolgte eine Abtrennung der an den Adsorbens-Formkörpern anhaftenden Bruch- und Feinanteile durch Sieben. Anschließend wurden die Adsorbens-Formkörper wieder in den Zylinder überführt und die Messung mit steigenden, auf die Probe ausgeübten Druckwerten solange wiederholt, bis der kumulierte Feinanteil einen Wert von 0,5 Gewichts-% aufwies. Die Genauigkeit der Messmethode beträgt ± 0,1 MPa.

### Seitendruckfestigkeit

Die Messung der Seitendruckfestigkeit (SDF) erfolgte mit dem Messgerät Zwick 0.5 der Firma Zwick/Roell GmbH mit einer 500N Messdose. Zur Auswertung wurde die Software "test Xpert II" verwendet. Es wurden mindestens 50 Einzelproben gemessen und die durchschnittliche Seitendruckfestigkeit berechnet, indem die Einzelwerte aufsummiert und durch die Anzahl an gemessenen Proben geteilt wurde. Die Seitendruckfestigkeit pro Durchmesser (SDFD) wurde ermittelt, indem zunächst der Wert der Seitendruckfestigkeit der jeweiligen Probe durch ihren Durchmesser geteilt wurde. Die so erhaltenen Einzelwerte wurden aufsummiert und durch die Anzahl an gemessenen Proben geteilt.

### Beispiel 1: verwendete Adsorbenzien

### Adsorbens A

Als Adsorbens A wurde ein kugelförmiger Formkörper mit einem mittleren Durchmesser von 2,8 mm eingesetzt, der einen Zeolith X mit einem atomaren Si/Al-Verhältnis von 1,14 aufwies und binderlos war.

### Adsorbens B

Als Adsorbens B wurde ein kugelförmiger Formkörper mit einem mittleren Durchmesser von 3,9 mm eingesetzt, der einen Zeolith X mit einem atomaren Si/Al-Verhältnis von 1,20 und einen Binderanteil in Form eines Tonminerals von 20 Gewichts-% aufwies.

### Adsorbens C

Als Adsorbens C wurde ein kugelförmiger Formkörper mit einem mittleren Durchmesser von 3,5 mm eingesetzt, der einen Zeolith X mit einem atomaren Si/Al-Verhältnis von 1,40 und einen Binderanteil in Form eines Tonminerals von 15 Gewichts-% aufwies.

### Adsorbens D

Als Adsorbens D wurde ein kugelförmiger Formkörper mit einem mittleren Durchmesser von 1,6 mm eingesetzt, der einen Zeolith Y mit einem atomaren Si/Al-Verhältnis von 2,50 aufwies und binderlos war.

Die Eigenschaften der Adsorbenzien A bis D sind in Tabelle 1 dargestellt.

### Beispiel 2: Adsorptionstest

Die in Beispiel 1 bereitgestellten Adsorbenzien wurden auf ihre Adsorptionsfähigkeit in Bezug auf Fe(CO)₅ untersucht.

Hierfür wurden die Adsorbenzien zunächst zerkleinert und eine Siebfraktion mit Durchmessern im Bereich 710 bis 1000 µm für die Messungen abgetrennt.

Für die Adsorptionsmessungen wurde ein Reaktor mit jeweils dem gleichen Schüttvolumen von 10 mL an Adsorbens gefüllt. Anschließend wurde der Reaktor auf eine Temperatur von 230 °C erhitzt und bei dieser Temperatur und einem Druck von 40 bar ein Gasstrom umfassend 4,0 ppmv Fe(CO)₅, 62,0 Vol.-% H₂, 27,7 Vol.-% CO, 2,5 Vol.-% CO₂ und 7,8 Vol.-% N₂ mit einer GHSV von 45000 h⁻¹ von oben durch die Schüttung des Adsorbens geleitet.

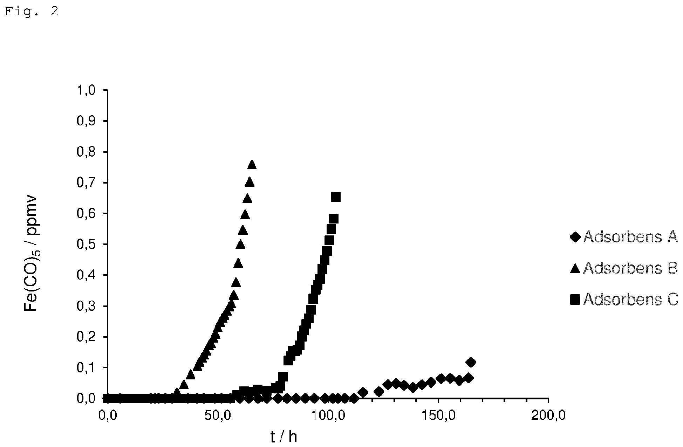

Die Konzentration an Fe(CO)₅ wurde hinter dem Gasaustritt des Reaktors gemessen und so die Durchbruchkurve bestimmt, die in Fig. 2 dargestellt ist.

Anhand von Fig. 2 erkennt man den Durchbruch der Adsorbenzien A bis C, das heißt den Zeitpunkt, an dem die Konzentration an Fe(CO)₅ im Gasstrom einen Wert von 0,1 ppmv überschreitet, was ein Maß für die Sättigung des Adsorbens darstellt.

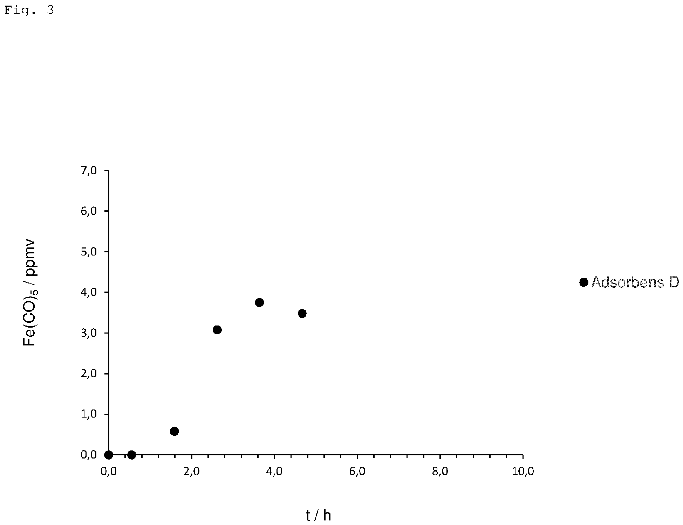

Unter den gleichen Bedingungen wurde Adsorbens D getestet. In Fig. 3 ist dessen Durchbruchskurve dargestellt. Der Durchbruch findet bereits nach ca. 0,5 h statt, außerdem steigt die Konzentration an Fe(CO)₅ im Gasstrom, der den Reaktor verlassen hat, in kurzer Zeit auf die Konzentration des ursprünglich eingesetzten Gasstroms an.

**Tabelle 1 Eigenschaften der Adsorbenzien A bis D**

| Probe | H₂O-Kapazität [Gew. -%] | BET [m²/g] | Mikroporenvolumen [mm³/g] | Porenvolumen [cm³/g] | Porosität [%] | SDF [N] | SDFD [N/mm] | Bulk Crush Strength [MPa] |
|---|---|---|---|---|---|---|---|---|
| Adsorbens A | 29,1 | 795 | 306 | 0,272 | 29,6 | 51,0 | 18,5 | 0,93 |
| Adsorbens B | 27,2 | 695 | 263 | 0,287 | 31,7 | 79,8 | 20,4 | 1,55 |
| Adsorbens C | 26,4 | 732 | 274 | 0,251 | 28,5 | 84,2 | 23,8 | 1,34 |
| Adsorbens D | 29,4 | 836 | 326 | 0,202 | 21,5 | 45,7 | 29,3 | n.a. |

## Patentansprüche

1. Verfahren zur adsorptiven Abtrennung von Metallcarbonylen aus einem CO, CO₂ und H₂ umfassenden Gasgemisch, **dadurch gekennzeichnet, dass** das verwendete Adsorbens einen Zeolith X umfasst.

2. Verfahren nach Anspruch 1, wobei der Zeolith X in der Na-Form vorliegt.

3. Verfahren nach einem der vorhergehenden Ansprüche, wobei das Metallcarbonyl Fe(CO)₅ ist.

4. Verfahren nach Anspruch 3, wobei der Anteil an Fe(CO)₅ im Gasgemisch bis zu 200 ppmv, bevorzugt bis zu 100 ppmv, besonders bevorzugt bis zu 50 ppmv beträgt.

5. Verfahren nach einem der vorhergehenden Ansprüche, wobei das Adsorbens einen binderlosen Zeolith X, bevorzugt in der Na-Form, umfasst.

6. Verfahren nach einem der vorhergehenden Ansprüche, wobei das Adsorbens in Form von sphärischen Formkörpern, bevorzugt in Form von Kugeln, vorliegt.

7. Verfahren nach Anspruch 6, wobei die sphärischen Formkörper eine Wasseraufnahmekapazität von mindestens 20 kg, bevorzugt mindestens 30 kg Wasser pro 100 kg trockenem Adsorbens aufweisen.

8. Verfahren nach einem der Ansprüche 6 oder 7, wobei die sphärischen Formkörper einen Durchmesser im Bereich von 1,0 mm bis 10,0 mm, bevorzugt von 1,5 mm bis 8,0 mm, noch bevorzugter von 2,0 bis 6,0 mm, am bevorzugtesten von 2,5 bis 5,0 mm haben.

9. Verfahren nach einem der vorhergehenden Ansprüche, wobei das Gasgemisch noch Verunreinigungen, insbesondere Methan, oder ein Spülgas, insbesondere Inertgase, bevorzugt Ar oder N₂, enthält.

10. Verfahren nach einem der vorhergehenden Ansprüche, wobei die Adsorption in einem Temperaturbereich von 30 °C bis 300 °C, bevorzugt im Bereich von 50 bis 270 °C, besonders bevorzugt im Bereich von 160 bis 270 °C, am bevorzugtesten im Bereich von 180 °C bis 230 °C stattfindet.

11. Verfahren nach einem der vorhergehenden Ansprüche, wobei die Adsorption bei einem Absolutdruck im Bereich von 20 bis 100 bar, bevorzugt im Bereich von 30 bis 90 bar, besonders bevorzugt im Bereich von 30 bis 80 bar und am bevorzugtesten im Bereich von 60 bis 80 bar stattfindet.

12. Verfahren nach Anspruch 11, wobei die Adsorption in einem Temperaturbereich von 10 °C bis 110 °C, bevorzugt 10 °C bis 40 °C, mehr bevorzugt im Bereich von 20 °C bis 30 °C und einem Absolutdruck im Bereich von 30 bis 80 bar stattfindet.

13. Verfahren nach einem der vorhergehenden Ansprüche, wobei das Gasgemisch nach der adsorptiven Abtrennung in einer Methanolsynthese umgesetzt wird.

14. Verfahren nach einem der vorhergehenden Ansprüche, wobei der Anteil an CO₂ im Gasstrom 1 bis 15 Volumen-%, bevorzugt 1 bis 10 Volumen-%, besonders bevorzugt 2 bis 10 Volumen-%, am bevorzugtesten 2 bis 5 Volumen-% beträgt.

15. Verfahren nach einem der vorhergehenden Ansprüche, wobei der Anteil an CO im Gasstrom 3 bis 35 Volumen-%, bevorzugt 5 bis 30 Volumen-%, besonders bevorzugt 10 bis 30 Volumen-%, am bevorzugtesten 7 bis 18 Volumen-% beträgt.

16. Verfahren nach einem der vorhergehenden Ansprüche, wobei der Anteil an Wasserstoff im Gasstrom 50 bis 96 Volumen-%, bevorzugt 50 bis 80 Volumen-%, besonders bevorzugt 60 bis 80 Volumen-% beträgt.

17. Verfahren nach einem der vorhergehenden Ansprüche, wobei die gasbezogene Raumgeschwindigkeit im Bereich von 1000 bis 120000 h⁻¹, bevorzugt 1000 bis 100000 h⁻¹, bevorzugter 10000 bis 100000 h⁻¹, besonders bevorzugt 20000 bis 100000 h⁻¹ beträgt.
